# EUROPÄISCHE PATENTANMELDUNG

(11) **EP 2 520 764 A1**
(43) Veröffentlichungstag der Anmeldung: **07.11.2012**
(21) Anmeldenummer: 11164421.7
(22) Anmeldetag: 02.05.2011
(51) Int. Cl.: F01D 5/08, F01D 5/18, F02C 7/18

(54) **Schaufel mit gekühltem Schaufelfuss**

(71) Anmelder: MTU Aero Engines GmbH, 80995 München (DE)
(72) Erfinder: Stiehler, Frank, 04924 Bad Liebenwerda (DE)

(57) **Zusammenfassung**

Offenbart ist eine Schaufel (2,4) für eine Strömungsmaschine, wobei zumindest ein Kühlkanal (30,32,34) in dem Schaufelhals (10) ausgebildet ist, dessen Einlass (50) nahe eines hochdruckseitigen Plattformvorsprungs (16) und dessen Auslass (52) im Bereich eines niederdruckseitigen Plattformvorsprungs (18) angeordnet ist, ein integral beschaufelter Rotorgrundkörper mit einer Vielzahl derartiger Schaufeln sowie eine Strömungsmaschine mit einem derartigen Rotorgrundkörper.

## Beschreibung

Die Erfindung betrifft eine Schaufel für eine Strömungsmaschine nach dem Oberbegriff des Patentanspruchs 1, einen integral beschaufelten Rotorgrundkörper sowie eine Strömungsmaschine.

Eine derartige Schaufel für eine Strömungsmaschine ist z.B. in der deutschen Patentanmeldung DE 10 2009 007 468 A1 offenbart. Diese hat einen Schaufelfuß, einen Schaufelhals, ein Schaufelblatt und eine zwischen dem Schaufelhals und dem Schaufelblatt ausgebildete Plattform mit einem in Strömungsrichtung eines Heißgasstromes betrachtet vorderen Vorsprung und einen hinteren Vorsprung zur radial inneren Begrenzung eines von dem Heißgasstrom durchströmten Ringraums und somit zur Abgrenzung eines Kühlluftstroms von dem Heißgasstrom. Im Schaufelfuß ist ein sich in Strömungsrichtung erstreckender Kühlkanal ausgebildet, über den Kühlluft in ein schaufelblattinternes Kühlluftsystem geführt wird. Zur zielsicheren Führung der Kühlluft in das Kühlluftsystem ist der Kühlkanal an seinem stromabwärtigen Auslass durch ein Dichtelement in Axialrichtung verschlossen oder zumindest querschnittreduziert. Dies führt zwar zu einer guten Kühlung der Schaufel per se, jedoch wird der Kühlluftstrom stark umgelenkt bzw. beeinflusst. Zudem sind die Schaufelfüße derart ausgebildet, dass zwischen ihnen jeweils ein Durchlass gebildet ist, der zum Ringraum über sich seitlich berührende Plattformflächen begrenzt ist und durch den Kühlluft von der Hochdruckseite zur Niederdruckseite strömen kann. Der Durchlass kann jedoch auch durch das Dichtelement stromabwärts der Schaufeln zumindest querschnittsreduziert sein. Um einen Gasaustauch durch die seitlich sich berührenden Plattformflächen zwischen dem Heißgasstrom und dem Kühlluftstrom zu verhindern, ist zwischen diesen eine Dichtung angeordnet. Bei einer Beschädigung der Dichtung kann jedoch ein deutlicher Gasaustausch erfolgen.

Aufgabe der Erfindung ist es, eine Schaufel für eine Strömungsmaschine zu schaffen, bei der die vorgenannten Nachteile beseitigt sind und bei der bei einer zumindest nahezu ungehinderten Durchströmung von Kühlluft sowie bei einer konstruktive Abgrenzung des Heißgasstromes von dem Kühlluftstrom eine optimierte Kühlung ermöglicht ist. Zudem ist es die Aufgabe der vorliegenden Erfindung, einen integral beschaufelten Rotor sowie eine Strömungsmaschine zu schaffen.

Diese Aufgabe wird gelöst durch eine Schaufel mit den Merkmalen des Patentanspruchs 1, durch einen Rotorgrundkörper mit den Merkmalen des Patentanspruchs 11 und durch eine Strömungsmaschine mit den Merkmalen des Patentanspruchs 14.

Eine erfindungsgemäße Schaufel für eine Strömungsmaschine hat einen Schaufelfuß, einen Schaufelhals, ein Schaufelblatt und eine zwischen dem Schaufelhals und dem Schaufelblatt ausgebildete Plattform mit einem in Strömungsrichtung eines Heißgasstromes betrachteten vorderen Vorsprung und einem hinteren Vorsprung zur Abgrenzung eines Kühlluftstroms von dem Heißgasstrom. Erfindungsgemäß weist die Schaufel zumindest einen Kühlkanal zur Führung zumindest eines Kühlluftteilstroms durch den Schaufelhals auf, dessen Einlass im Bereich des vorderen Vorsprungs und dessen Auslass im Bereich des hinteren Vorsprungs angeordnet ist.

Durch den zumindest einen schaufelhalsseitigen Kühlkanal kann eine ungehinderte Durchströmung zumindest eines Kühlluftteilstroms erfolgen, wodurch eine hohe Kühlung der Schaufel im Halsbereich erzielt wird. Zudem wird die Führung zumindest dieses Kühlluftteilstroms konstruktiv von der Führung des Heißgasstroms getrennt, was einen ungewollten Gastausch wesentlich erschwert. Insbesondere werden wärmeleitende Querschnitte des Schaufelhalses verringert und wärmeabgebende Oberflächen des Schaufelhalses vergrößert, wodurch ein hoher Temperaturgradient zwischen einer kalten Rotornabe und dem heißen Schaufelblatt einstellbar ist. Tragende Querschnitte des Schaufelblattes sind weiter nach außen in Umfangsrichtung gelegt, wodurch das Schaufelblatt steifer wird und der Schaufelhals massenreduziert ausgeführt werden kann. Hierdurch wird Masse aus der Biegelinie entfernt, was sich zudem günstig auf das Schwingverhalten und Laufverhalten der Schaufel auswirkt. Der zumindest eine Kühlkanal kann bereits bei der Schaufelherstellung oder aber nachträglich beispielsweise mittels elektrochemischer Bearbeitung wie ECM bzw. PECM integriert werden. Bewegende Bauteile zur Kühlung des Schaufelhalses sowie Anbauteile wie Leitbleche und dergleichen sind nicht notwendig. Zudem kann die erfindungsgemäße Kühlung des Schaufelhalses mit einer internen Schaufelblattkühlung kombiniert werden. Ausdrücklich sei erwähnt, dass sich derartige Schaufeln sowohl zur integralen Anbindung an eine Rotornabe bzw. einen Grundkörper eines Rotors zur Herstellung eines integral beschaufelten Rotorgrundkörpers als auch zur lösbaren Montage an einen Grundkörper eines Rotors eignen.

Bei einem bevorzugten Ausführungsbeispiel weist der zumindest eine Kühlkanal zwischen dem Einlass und dem Auslass einen querschnittserweiterten Abschnitt auf. Hierdurch wird in dem Schaufelhals ein großvolumiger Hohlraum geschaffen, wodurch eine weitere Vergrößerung der wärmeabgebenden Oberflächen erzielt wird und die Wandstärken des Schaufelhalses merklich reduziert sind, was eine Wärmespeicherung erschwert. Zudem wird das Gewicht der Schaufel reduziert.

Bei einem Ausführungsbeispiel ist in dem zumindest einen Kühlkanal zumindest ein Turbulator zur Verwirbelung des Kühlluftteilstromes angeordnet, wodurch ein verbesserter Wärmeübergang von den aufgeheizten Schaufelhalswänden auf den Kühlluftteilstrom erfolgt.

Um jedoch dem Kühlluftteilstrom nicht zu viel kinetische Energie zu entziehen und dadurch die Kühlung der nachfolgenden Schaufelreihen zu schwächen, ist es vorteilhaft, wenn sich der zumindest eine Turbulator im Wesentlichen außerhalb bzw. neben einer sich zwischen dem Einlass und dem Auslass erstreckenden fiktiven Kanalachse befindet.

Das Ein- sowie Ausströmen des zumindest einen Kühlluftteilstroms lässt sich dadurch verbessern, dass der Einlass und der Auslass so ausgerichtet sind, dass ein Drall des Kühlluftstromes ausgenutzt wird. Alternativ können der Einlass und der Auslass auch so ausgerichtet sein, dass der Drall des Kühlluftstromes vermieden wird. Zudem kann der zumindest eine Kühlluftteilstrom durch sogernanntes "Pumpen" verbessert werden, welches dadurch erreicht wird, dass die Kanalachse schräg nach außen gerichtet ist. D.h. der Auslass ist radial außenliegend und der Einlass radial innenliegend angeordnet.

Zur strukturmechanischen Verbesserung ist es vorteilhaft, wenn wie bei einem Ausführungsbeispiel der zumindest eine Kühlkanal nach dem Schaufelblatt ausgerichtet ist.

Um möglichst viel Kühlluft durch den Schaufelhals zu führen, weist ein Ausführungsbeispiel eine Vielzahl von Kühlkanälen, beispielsweise drei Kanäle, auf. Die Kühlkanäle sind vorzugweise in Querrichtung des Schaufelhalses nebeneinander angeordnet und können lediglich durch verhältnismäßig dünne Kanalwände voneinander getrennt sein. Hierdurch entspricht die Summe ihrer Einlassbreiten in etwa der Breite des Schaufelhalses, so dass der Schaufelhals im Prinzip keine stirnseitigen Stauflächen aufweist, gegen die der Kühlluftstrom prallen könnte.

Zur Kühlung des Schaufelfußes kann dieser zwei konkave Seitenwände haben. Hierdurch ist zwischen zwei benachbarten Schaufelfüßen ein Durchlass gebildet, durch den ebenfalls ein Kühlluftteilstrom strömen kann.

Um einen Gasaustausch in radialer Richtung zwischen dem Kühlluftstrom und dem Heißgasstrom im Bereich der Plattform zu vermeiden, ist bei einem Ausführungsbeispiel in Seitenwänden des Schaufelhalses jeweils eine Einlegenut zur Aufnahme eines Dichtelementes ausgebildet.

Ein erfindungsgemäßer Rotorgrundkörper für eine Strömungsmaschine hat eine Vielzahl von den erfindungsgemäßen Schaufeln. Die Schaufeln ermöglichen aufgrund der reduzierten wärmeübertragenden Querschnitte und der vergrößerten wärmeabgebenden Flächen eine Einstellung eines scharfen Temperaturgradienten zwischen der kalten Rotornabe und den heißen Schaufelblättern, wodurch eine weit außen liegende Scheiben- bzw. Ringgeometrie ermöglicht wird und eine Absenkung der Temperatur in kritischen Bauteilbereichen erreicht wird.

Bei einem Ausführungsbeispiel ist der Rotorgrundkörper in Bling-Bauweise (Bladed Ring) oder Blisk-Bauweise (Bladed Disk) als ein integral beschaufelter Rotorgrundkörper mit integral angebundenen Schaufeln ausgebildet.

Bei einem anderen Ausführungsbeispiel ist der Rotorgrundkörper als ein Rotorgrundkörper mit lösbar montierten Schaufeln versehen.

Eine erfindungsgemäße Strömungsmaschine hat einen Rotor mit zumindest einem erfindungsgemäßen integral beschaufelten Rotorgrundkörper. Aufgrund der gewichtsreduzierten Schaufeln weist eine derartige Strömungsmaschine ein verbessertes Laufverhalten und einen geringen Treibstoffverbrauch auf.

Sonstige vorteilhafte Ausführungsbeispiele der Erfindung sind Gegenstand weiterer Unteransprüche.

Im Folgenden wird ein bevorzugtes Ausführungsbeispiel der Erfindung anhand schematischer Darstellungen näher erläutert. Es zeigen:
Figur 1 eine Vorderansicht eines erfindungsgemäßen integral beschaufelten Rotorgrundkörpers im Bereich von zwei benachbarten erfindungsgemäßen Schaufeln, und
Figur 2 eine Rückansicht des Rotorgrundkörpers aus Figur 1.

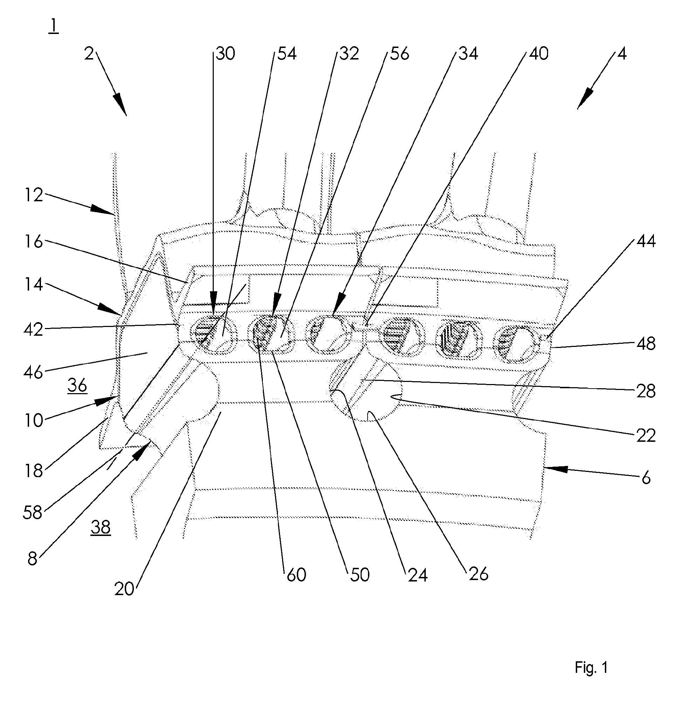

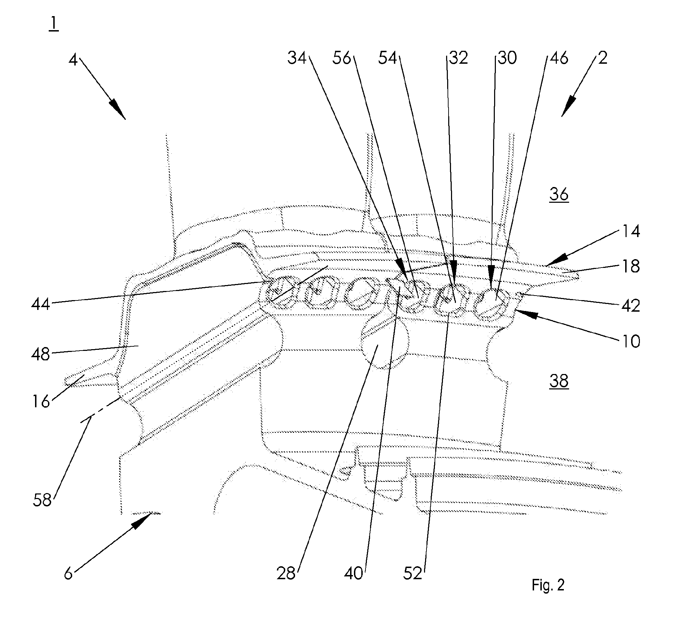

Die Figuren 1 und 2 zeigen einen Abschnitt eines integralen Rotorgrundkörpers 1 für eine Strömungsmaschine wie ein Flugzeugtriebwerk in Vorderansicht (Fig. 1) und in Rückansicht (Fig. 2). Der Rotorgrundkörper 1 hat ein Vielzahl von eine Schaufelreihe bildenden Laufschaufeln 2, 4, die an einem turbinenseitigen ring-oder scheibenförmigen Grundkörper 6 integral angebunden sind.

Die Laufschaufeln 2, 4 sind identisch ausgebildet, so dass im Folgenden stellvertretend für sämtliche Laufschaufeln 2, 4 des Rotorgrundkörpers 1 vorrangig nur die Laufschaufel 2 näher beziffert ist.

Die Laufschaufel 2, 4 haben jeweils einen Schaufelfuß 8, einen Schaufelhals 10, ein Schaufelblatt 12 und eine zwischen dem Schaufelhals 10 und dem Schaufelblatt 12 angeordnete Plattform 14 mit einem in Strömungsrichtung eines Heißgasstromes betrachtet vorderen Vorsprung 16 und einem hinteren Vorsprung 18.

Der Schaufelfuß 8 ist entweder als ein integraler Bestandteil der Laufschaufeln 2, 4 oder als ein separat ausgebildetes und nachträglich mit der Laufschaufel 2, 4 gefügtes Bauteil ausgebildet. Er hat einen rechteckigen Querschnitt und ist mit seiner radial innenliegenden Umfangsfläche stoffflüssig, beispielsweise mittels eines Reibschweißverfahrens, an einem Sockel 20 des Grundkörpers 6 angebunden. Er hat zwei konkav ausgebildete Seitenwände 22, 24, die bündig in eine sich zwischen zwei Sockeln 20 erstreckende Grundkörperwandung 26 übergehen und einen Durchlass 28 zwischen den benachbarten Schaufelfüßen 8 für einen Kühlluftteilstrom von der Hochdruckseite zur Niederdruckseite begrenzen. Der Durchlass 28 ist zur Rotationsachse des Rotorgrundkörpers 1 derart angestellt, dass er sich in Strömungsrichtung des Heißgasstromes betrachtet schräg radial nach außen erstreckt (s. Fig. 2).

Der Schaufelhals 10 ist gegenüber dem Schaufelfuß 8 in Umfangsrichtung betrachtet verbreitert ausgebildet. Dabei ist er derart verbreitert, dass der Durchlass 28 einen nahezu kreisförmigen Querschnitt aufweist. In dem Schaufelhals 10 sind drei Kühlkanäle 30, 32, 34 zur Führung jeweils eines Kühlluftteilstromes durch den Schaufelhals 10 ausgebildet, die im Folgenden noch näher erläutert werden.

Die Plattform 14 wird von dem Schaufelhals 10 gebildet und grenzt mit ihren Vorsprüngen 16, 18 einen schaufelblattseitigen Ringraum 36 für den Heißgasstrom von einem rotorseitigen Kühlraum 38 für den Kühlluftstrom ab. Die jeweils benachbarten Plattformen 14 berühren sich seitlich, wobei zur Vermeidung eines Gasaustausches zwischen dem Heißgasstrom und dem Kühlluftstrom in radialer Richtung zwischen den Schaufelhälsen 10 hindurch ein Dichtelement 40 angeordnet ist. Dieses erstreckt sich im Prinzip von dem vorderen Vorsprung 16 bis zum hinteren Vorsprung 18 und ist hälftig in jeweils einer Einlegenut 42, 44 der Seitenwände 46, 48 der Schaufelhälse 10 eingesetzt. Zur Erleichterung einer Ultraschallprüfung sind die Seitenwände 46, 48, die massive Gusswände sein können, eben ausgebildet.

Das Schaufelblatt 12 ist herkömmlicher Art, so dass eine einzelne Erläuterung entfällt. Grundsätzlich kann es mit einem internen Kühlluftsystem versehen sein, dass über einen in zumindest einen der Kühlkanäle 30, 32, 34 mündenden Zulaufkanal mit Kühlluft versorgt werden.

Die Kühlkanäle 30, 32, 34 sind jeweils identisch bzw. analog ausgeführt, so dass stellvertretend für alle Kühlkanäle 30, 32, 34 vorrangig die Elemente bzw. Bauteile des mittleren Kühlkanals 32 mit jeweils einem Bezugszeichen versehen sind.

Die Kühlkanäle 30, 32, 34 haben gleiche Querschnitte und erstrecken sich durch den Schaufelhals 10 in Strömungsrichtung des Heißgasstromes gemäß den Darstellungen in den Figuren 1 und 2 unterhalb der Vorsprünge 16, 18 hindurch. Dabei ist ihr in etwa kreisförmiger Einlass 50 im Bereich des vorderen Vorsprungs 16 und ihr in etwa kreisförmiger Auslass 52 im Bereich des hinteren Vorsprungs 18 angeordnet. Es ist selbstredend, dass in vertikaler Richtung betrachtet bei einer Drehung des Rotorgrundkörpers 1 um 180° die Kühlkanäle 30, 32, 34 oberhalb der Vorsprünge 16, 18 und bei einer Drehung um 90° bzw. 270° seitlich der Vorsprünge 16, 18 angeordnet sind. Vorzugsweise sind die Einlässe 50 und die Auslässe 52 jedoch derart angeordnet, dass ein abgerundeter Übergangsabschnitt der Vorsprünge 16, 18 in den Schaufelhals 10 einen Randabschnitt der Einlässe 50 sowie der Auslässe 52 bilden.

Die Kühlkanäle 30, 32, 34 sind jeweils über eine Kanalwand 54, 56 voneinander getrennt und zwischen dem Einlass 50 und dem Auslass 52 in Richtung der Plattform 14 querschnittserweitert. Durch diesen erweiterten Abschnitt haben die Kühlkanäle 30, 32, 34 jeweils eine Innenkontur, die einer Außenkontur des Schaufelhalses 10 entspricht, so dass der Schaufelhals 10 quasi als ein Hohlkörper ausgebildet ist, der über die Kanalwände 54, 56 in drei einzelne Kammern mit jeweils einem kleinen Eingang 50 und einem kleinen Ausgang 52 unterteilt ist. Entsprechend dünnwandig ist der Schaufelhals 10 ausgebildet. Um eine ausreichende strukturelle Stabilität des Schaufelhalses 10 zu erreichen, sind die Kühlkanäle 30, 32, 34 nach dem Schaufelblatt 12 ausgerichtet. Hierzu haben die Kanalwände 54, 56 eine Freiformkontur und sind nach strukturmechanischen Kriterien gestaltet. Zur Einstellung eines hohen Temperaturgradienten zwischen dem kalten Grundkörper 6 und dem jeweiligen heißen Schaufelblatt 12 ist ein wärmeübertragender Gesamtquerschnitt des Schaufelhalses 10, der von den Kanalwänden 54, 56 und den Seitenwänden 46, 48 gebildet wird, kleiner als ein Querschnitt des Schaufelfußes bzw. Adapters 8.

Zwischen einer sich im Kühlkanal 30 skizzierten zwischen dem Einlass 50 und dem Auslass 52 erstreckenden fiktiven Kanalachse 58 und der Plattform 14, d.h. gemäß den Darstellungen in Figur 1 und 2 oberhalb der Kanalachse 58 und unterhalb der Plattform 14, sind in den erweiterten Abschnitten der Kühlkanäle 30, 32, 34 Turbulatoren 60 zur bereichsweisen Verwirbelung des Kühlluftteilströme angeordnet. Diese erstrecken sich zwischen den Kanalwänden 54 und 56 bzw. zwischen einer Kanalwand 54, 56 und einer Seitenwand 46, 48 des Schaufelhalses 10 und sind als in die erweiterten Abschnitte ragende Rippen ausgebildet.

Im Betrieb strömt jeweils ein Kühlluftteilstrom durch einen der Kühlkanäle 30, 32, 34 und durchströmt somit den Schaufelhals 10 von der Hochdruckseite zur Niederdruckseite. Die Kühlluft wird in den Kühlkanälen 30, 32, 34 über die Turbulatoren 60 verwirbelt, wodurch eine verbesserte Wärmeübertragung auf die Kühlluftteilströme erzielt wird. Zudem strömt jeweils ein Kühlluftteilstrom durch die Durchlässe 28, wodurch eine äußere Kühlung der Schaufelfüße 8 erfolgt. Diese können jedoch endseitig, d.h. niederdruckseitig durch ein nicht gezeigtes, bspw. plattenartiges Dichtelement verschlossen bzw. querschnittsverjüngt sein, so dass der Kühlluftstrom ausschließlich bzw. vorrangig durch die Kühlkanäle 30, 32, 34 geführt wird.

Offenbart ist eine Schaufel für eine Strömungsmaschine, wobei zumindest ein Kühlkanal in dem Schaufelhals ausgebildet ist, dessen Einlass nahe eines hochdruckseitigen Plattformvorsprungs und dessen Auslass im Bereich eines niederdruckseitigen Plattformvorsprungs angeordnet ist, ein integral beschaufelter Rotorgrundkörper mit einer Vielzahl derartiger Schaufeln sowie eine Strömungsmaschine mit einem derartigen Rotorgrundkörper.

### Bezugszeichenliste

- 1: Rotorgrundkörper
- 2: Laufschaufel
- 4: Laufschaufel
- 6: Grundkörper
- 8: Schaufelfuß
- 10: Schaufelhals
- 12: Schaufelblatt
- 14: Plattform
- 16: vorderer Vorsprung
- 18: hinterer Vorsprung
- 20: Sockel
- 22: Seitenwand
- 24: Seitenwand
- 26: Körperwandung
- 28: Durchlass
- 30: Kühlkanal
- 32: Kühlkanal
- 34: Kühlkanal
- 36: Ringraum
- 38: Kühlraum
- 40: Dichtelement
- 42: Einlegenut
- 44: Einlegenut
- 46: Seitenwand
- 48: Seitenwand
- 50: Einlass
- 52: Auslass
- 54: Kanalwand
- 56: Kanalwand
- 58: Kanalachse
- 60: Turbulatoren

## Patentansprüche

1. Schaufel (2, 4) für eine Strömungsmaschine, mit einem Schaufelfuß (8), einem Schaufelhals (10), einem Schaufelblatt (12) und einer zwischen dem Schaufelhals (10) und dem Schaufelblatt (12) ausgebildeten Plattform (14) mit einem in Strömungsrichtung eines Heißgasstroms betrachtet vorderen Vorsprung (16) und einem hinteren Vorsprung (16) zur Abgrenzung eines Kühlluftstroms von dem Heißgasstrom, **gekennzeichnet durch** zumindest einen Kühlkanal (30, 32, 34) zur Führung zumindest eines Kühlluftteilstroms **durch** den Schaufelhals (10), dessen Einlass (50) im Bereich des vorderen Vorsprungs (16) und dessen Auslass (52) im Bereich des hinteren Vorsprungs (18) angeordnet ist.

2. Schaufel nach Anspruch 1, wobei der zumindest eine Kühlkanal (30, 32, 34) zwischen dem Einlass (50) und dem Auslass (52) einen erweiterten Abschnitt aufweist.

3. Schaufel nach Anspruch 1 oder 2, wobei in dem zumindest einem Kühlkanal (30, 32, 34) zumindest ein Turbulator (60) angeordnet ist.

4. Schaufel nach Anspruch 3, wobei der zumindest eine Turbulator (60) im Wesentlichen von einer sich zwischen dem Einlass (50) und dem Auslass (52) erstreckenden fiktiven Kanalachse (58) beabstandet ist.

5. Schaufel nach einem der vorhergehenden Ansprüche, wobei der Einlass (50) und der Auslass (52) einen Drall des Kühlluftstroms ausnutzen.

6. Schaufel nach einem der vorhergehenden Ansprüche, wobei der zumindest eine Kühlkanal (30, 32, 34) nach dem Schaufelblatt (12) ausgerichtet ist.

7. Schaufel nach einem der vorhergehenden Ansprüche, wobei eine Vielzahl von Kühlkanälen (30, 32, 34) vorgesehen ist.

8. Schaufel nach Anspruch 7, wobei die Kühlkanäle (30, 32, 34) in Schaufelquerrichtung nebeneinander angeordnet sind.

9. Schaufel nach einem der vorhergehenden Ansprüche, wobei der Schaufelfuß (8) zwei konkave Seitenwände (22, 24) hat.

10. Schaufel nach einem der vorhergehenden Ansprüche, wobei in Seitenwänden (46, 48) des Schaufelhalses (10) jeweils eine Einlegenut (42, 44) für ein radiales Dichtelement (40) ausgebildet ist.

11. Rotorgrundkörper (1) mit einer Vielzahl von Schaufeln (2, 4) nach einem der vorhergehenden Ansprüche.

12. Rotorgrundkörper nach Anspruch 11, wobei die Schaufeln (2, 4) integral angebunden sind.

13. Rotorgrundkörper nach Anspruch 11, wobei die Schaufeln (2, 4) lösbar montiert sind.

14. Strömungsmaschine mit einem Rotor mit einem Rotorgrundkörper (1) nach Anspruch 11,12 oder 13.

## Geänderte Patentansprüche

### Geänderte Patentansprüche gemäss Regel 137(2) EPÜ.

**1.** Schaufel (2, 4) für eine Strömungsmaschine, mit einem Schaufelfuß (8), einem Schaufelhals (10), einem Schaufelblatt (12), einer zwischen dem Schaufelhals (10) und dem Schaufelblatt (12) ausgebildeten Plattform (14) mit einem in Strömungsrichtung eines Heißgasstroms betrachtet vorderen Vorsprung (16) und einem hinteren Vorsprung (16) zur Abgrenzung eines Kühlluftstroms von dem Heißgasstrom, und mit zumindest einem Kühlkanal (30, 32, 34) zur Führung zumindest eines ICiYhlluftteilstroms durch den Schaufelhals (10), dessen Einlass (50) im Bereich des vorderen Vorsprungs (16) und dessen Auslass (52) im Bereich des hinteren Vorsprungs (18) angeordnet ist, **dadurch gekennzeichnet, dass** der Kühlkanal (30, 32, 34) zwischen dem Einlass (50) und dem Auslass (52) einen erweiterten Abschnitt aufweist, in dem zumindest ein hineinragender Turbulator (60) angeordnet ist, der von einer sich zwischen dem Einlass (50) und dem Auslass (52) erstreckenden fiktiven Kanalachse (58) beabstandet ist.

**2.** Schaufel nach Anspruch 1, wobei der Einlass (50) und der Auslass (52) einen Drall des Kühlluftstroms ausnutzen.

**3.** Schaufel nach Anspruch 1 oder 2, wobei der zumindest eine Kühlkanal (30, 32, 34) nach dem Schaufelblatt (12) ausgerichtet ist.

**4.** Schaufel nach Anspruch 1, 2 oder 3, wobei eine Vielzahl von Kühlkanälen (30, 32, 34) vorgesehen ist.

**5.** Schaufel nach Anspruch 4, wobei die Kühlkanäle (30, 32, 34) in Schaufelquerrichtung nebeneinander angeordnet sind.

**6.** Schaufel nach einem der vorhergehenden Ansprüche, wobei der Schaufelfuß (8) zwei konkave Seitenwände (22, 24) hat.

**7.** Schaufel nach einem der vorhergehenden Ansprüche, wobei in Seitenwänden (46, 48) des Schaufelhalses (10) jeweils eine Einlegenut (42, 44) für ein radiales Dichtelement (40) ausgebildet ist.

**8.** Rotorgrundkörper (1) mit einer Vielzahl von Schaufeln (2, 4) nach einem der vorhergehenden Ansprüche.

**9.** Rotorgrundkörper nach Anspruch 8, wobei die Schaufeln (2, 4) integral angebunden sind.

**10.** Rotorgrundkörper nach Anspruch 8, wobei die Schaufeln (2, 4) lösbar montiert sind.

**11.** Strömungsmaschine mit einem Rotor mit einem Rotorgrundkörper (1) nach Anspruchs, 9 oder 10.
